(19) Europäisches Patentamt
European Patent Office
Office européen des brevets

(11) EP 2 058 806 A1

(12) EUROPEAN PATENT APPLICATION

(43) Date of publication:
13.05.2009 Bulletin 2009/20

(51) Int Cl.:
G11B 7/085 (2006.01)     G11B 7/09 (2006.01)
G11B 7/00 (2006.01)      G11B 7/125 (2006.01)
G11B 7/135 (2006.01)     G11B 19/12 (2006.01)

(21) Application number: 08168448.2

(22) Date of filing: 06.11.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 08.11.2007 JP 2007290936

(71) Applicant: Funai Electric Co., Ltd.
Daito-shi,
Osaka 574-0013 (JP)

(72) Inventor: Ichihara, Kazuo,
c/o Funai Electric Co., Ltd.
Daito-shi
Osaka 574-0013 (JP)

(74) Representative: Erny, Tobias
Beetz & Partner
Patentanwälte
Steinsdorfstrasse 10
80538 München (DE)

(54) **Optical disc apparatus and spherical aberration correcting method**

(57)    An optical disc apparatus (1) corrects spherical aberration by moving a movable lens along an optical axis direction. A spherical aberration correcting method in the optical apparatus includes: a step to obtain data which relates to a most appropriate adjusted position of the movable lens in the optical disc apparatus (1) utilizing an optical discs (50) for condition setting and to store the data in advance; a step to calculate the distance from the surface of the optical disc (50) that is loaded in the optical disc apparatus (1) to the information recording layer (50 a); a step to obtain difference of the distance between the calculated distance and distance that the optical disc should have as specified in standard, with respect to the distance from the surface of the optical disc (50) that is loaded in the optical disc apparatus (1) to the information recording layer (50 a); and a step to perform correction of the spherical aberration such that the most appropriate adjusted position which corresponds to the optical disc (50) that is loaded in the optical disc apparatus (1) is shifted in a distance which is substantially the same as the difference of distances that is obtained.

Fig. 6

## Description

BACKGROUND OF THE INVENTION

Field of the Invention

The present invention relates to an optical disc apparatus which is used for reproducing of information that is recorded in an optical disc or recording of information in an optical disc, in particular, the present invention relates to technology to perform correction of spherical aberration. Further the present invention relates to spherical aberration correcting method for the optical disc apparatus.

Description of Related Art

Optical disc such as a compact disc (hereinafter referred to as a CD) and a digital versatile disc (hereinafter referred to as a DVD) are widely available from past. Further, optical disc which can record much large capacity of information, such as Blu-ray disc (hereinafter referred to as a BD) and the like arc developed recently for practical use. In addition, in the BD or the DVD, for example, there exists an optical disc which has a plurality of information recording layers (multilayer optical disc) in thickness direction of the optical disc in order to further increase recording capacity of information.

An optical disc apparatus provided with an optical pickup is used to perform reproducing of recorded information or recording of information from/to these optical discs. The optical pickup is made movable along a radial direction of the optical disc and performs reproducing of information which is recorded on the optical disc or writing of information on the optical disc by irradiating light beam on the optical disc.

There are a plurality of kinds of the optical discs as above described, thickness of cover layer to protect the information recording layer is different in some optical discs. For example, the BD has the cover layer of 0.1 mm thickness, the DVD has the cover layer of 0.6 mm thickness, and the CD has the cover layer of 1.1 mm thickness. It should be noted that these examples are the optical discs with single information recording layer.

Further, some BDs and DVDs have a plurality of information recording layers as above described, and thickness of the cover layer is different for every recording layer in such optical discs. It should be noted that, in this description, an intermediate layer between two information recording layers is also presumed as one kind of the cover layer. In the BD which has two layers of information recording layers, for example, thickness of the cover layer for L0 layer is 0.1 mm, and thickness of the cover layer for L1 layer is 0.075 mm.

When the optical pickup is structured in order that reading and writing of information for a plurality of kinds of the optical discs whose thickness of the cover layers are different as above describe, or for the optical disc which has a plurality of information recording layers, it is known that it is necessary to structure the optical pickup such that correction of the spherical aberration which is generated from thickness of the cover layer can be performed. As a result, optical disc apparatuses which are provided with various types of spherical aberration correcting mechanisms are proposed heretofore.

As one example of the spherical aberration correcting mechanism, it is known that a type of the optical disc apparatus which performs the correction of the spherical aberration by changing state of convergence and divergence of the light beam that is input to the objective lens (for example, see JP-A-2006-252615). It should be noted that the objective lens described here means a focusing lens by which the light beam that is emitted from the light source is focused on the information recording layer of the optical disc.

When the above described the spherical aberration correcting mechanism is explained in more detail, for example, a spherical aberration correcting mechanism which is structured by an expander lens which is made up of two or more groups of lenses system, and a means to alter space between respective lens groups, can be mentioned. Further, as for another example, a spherical aberration correcting mechanism which is structured by a collimator lens that is disposed in a light path between the light source and the objective lens, and a moving means to move the collimator lens along an optical axis direction can be mentioned.

In case where the correction of the spherical aberration is performed utilizing the spherical aberration correcting mechanism described above, it is conventionally performed that space of the expander lens is set in a prescribed length or that the collimator lens is disposed in a prescribed position depending on kind of the optical disc or kind of the information recording layer. However, the spherical aberration becomes large in proportion to biquadrate of the numerical aperture (NA) of the objective lens. By this reason, when reproducing or recording is performed for the BD which requires especially large numerical aperture, there was a case where spherical aberration could not be corrected enough because influence of variation in thickness of the cover layer in the optical disc became large.

As a result, a method is conventionally achieved that after space of the expander lens is set in the prescribed length or the collimator lens is disposed in the prescribed position, reproduced signal is evaluated and the space of the expander lens or the position of the collimator lens is adjusted again based on the result of the evaluation. According to this method, even when there is variation in thickness of the cover layer of the optical disc, proper correction of the spherical aberration can be performed for the respective optical discs. However, in case of this structure, there is a problem that time to decide a setting condition for the spherical aberration correcting mechanism becomes very long.

By this reason, in JP-A-2007-164927, technology about a multilayer optical disc is proposed in which distance from surface of the cover layer to the recording layer is calculated for every recording layer, amount of the correction of the spherical aberration is obtained for every recording layer based on the calculated distances for every recording layer and spherical aberration correction amount table which is prepared in advance. By this technology, the correction of the spherical aberration can be performed irrespective of variation in thickness of the cover layer in the optical disc.

However, in case of the structure disclosed in JP-A-2007-164927, a table or a relational expression to obtain correction amount of the spherical aberration is required to prepare in advance, and operation for preparation of them is tiresome. Further, there may be a case where the setting condition to correct the spherical aberration in the spherical aberration correcting mechanism becomes different for every optical pickup because of variation or the like when the optical pickup is manufactured. In this regard, in JP-A-2007-164927 no specific consideration about variation of optical pickup in production is described, therefore, there may be a case where the correction of the spherical aberration cannot be performed correctly.

SUMMARY OF THE INVENTION

In view of the above described problems, it is an object of the present invention to provide an optical disc apparatus which performs correction of the spherical aberration in consideration of variation in production of an optical disc in addition to variation in production of the optical disc apparatus. Further, it is another object of the present invention to provide a spherical aberration correcting method by which correction of the spherical aberration is performed in consideration of variation in production of an optical disc in addition to variation in production of the optical disc apparatus.

To attain the above described object, an optical disc apparatus in accordance with the present invention includes a light source; an objective lens which focuses light beam which is emitted from the light source on an information recording layer of an optical disc; a spherical aberration correcting mechanism which has a movable lens disposed between the light source and the objective lens, the lens being able to move along an optical axis direction, and a lens moving mechanism for moving the movable lens, and the mechanism performing correction of the spherical aberration by adjusting position of the movable lens; a photo detecting portion which receives the light beam that is reflected by the optical disc to perform photoelectric conversion; a memory portion which stores data that relates to a most appropriate adjusted position of the movable lens in the optical disc apparatus, the data being obtained in advance utilizing at least one kind of optical discs for condition setting that is formed such that distance from a surface of the optical to the information recording layer meets a standard; a distance obtaining portion which obtains the distance from the surface of the optical disc that is loaded in the optical disc apparatus to the information recording layer; and a difference of distance calculating portion which calculates difference of distance between the distance that is obtained by the distance obtaining portion and distance that the optical disc should have as specified in standard, with respect to the distance from the surface of the optical disc that is loaded in the optical disc apparatus to the information recording layer. Then, the correction of the spherical aberration by the spherical aberration correcting mechanism is characterized by being performed such that the position of the movable lens is shifted a substantially same distance as the difference of distance that is obtained by the difference of distance calculating portion from the most appropriate adjusted position.

By this arrangement, the most appropriate adjusted position is stored in every optical disc apparatus in consideration of variation in production for every apparatus with respect to the position of the movable lens included in the spherical aberration correcting mechanism. In addition, the distance from the surface of the optical disc to the information recording layer is measured, and the most appropriate adjusted position obtained in advance is corrected based on the difference between the measured distance and the distance that is specified in standard. As a result, the present invention has the structure in which the correction of the spherical aberration is performed in consideration of the variation in production of the optical disc apparatus and the optical disc, it is easy to perform reproducing and recording of information while the spherical aberration is constrained. Therefore, by the optical disc apparatus according to the present embodiment, it is expectable that quality of reproducing and recording of information is improved.

Further, it is no problem that in the present invention, the movable lens may be a collimator lens, or at least one lens of an expander lens which has a of lenses in the optical disc apparatus that is structured as above described. By this arrangement, the structure utilizes the lens which is used conventionally to perform the correction of the spherical aberration, therefore, it is easy to realize the object of the present invention.

Further, it is preferable that in the present invention the optical disc apparatus further incudes an objective lens actuator which makes the objective lens move along a direction that the objective lens comes closer to or goes away from the optical disc, wherein the distance obtaining portion detects the surface of the optical disc and the information recording layer, by using a prescribed signal that is obtained by preceding a signal which is output from the photo detecting portion when the objective lens is moved by the objective lens actuator, to obtain the distance from the surface of the optical disc to the information recording layer, in the optical disc apparatus that is structured as above described. By this arrangement, a part of flow for the present invention can be same as a method to discriminate kind of the optical disc, and it becomes possible to obtain condition to correct the spherical aberration with high speed.

Further it is preferable that in the present invention the prescribed signal is a focus error signal or a summed signal which is obtained by adding signals that are output from a plurality of divided areas of the photo detecting portion, in the optical disc apparatus that is structured as above described.

Further, to attain the above described object, the present invention is a spherical aberration correcting method in an optical disc apparatus including a spherical aberration correcting mechanism which corrects a spherical aberration by moving a movable lens along an optical axis direction, the method is characterized by including: a step to obtain data which relates to a most appropriate adjusted position of the movable lens in the optical disc apparatus utilizing at least one kind of optical discs for condition setting that is formed such that distance from a surface of the optical disc to an information recording layer thereof meets a standard, and to store the data in a memory portion in advance; a step to calculate the distance from the surface of the optical disc that is loaded in the optical disc apparatus to the information recording layer; a step to obtain difference of the distance between the calculated distance and distance that the optical disc should have as specified in standard, with respect to the distance from the surface of the optical disc that is loaded in the optical disc apparatus to the information recording layer; and a step to perform correction of the spherical aberration such that the most appropriate adjusted position which corresponds to the optical disc that is loaded in the optical disc apparatus is shifted a substantially same distance as the difference of distances that is obtained.

By this arrangement, the most appropriate adjusted position is stored in every optical disc apparatus in consideration of variation in production for every apparatus, with respect to the position of the movable lens included in the spherical aberration correcting mechanism. In addition, the distance from surface of the optical disc to the information recording layer is measured, and the most appropriate adjusted position obtained in advance is corrected based on the difference between the measured distance and the distance that is specified in standard. As a result, because the correction of the spherical aberration is performed in consideration of the variation in production of the optical disc apparatus and the optical disc, it is easy to perform more effectively correction of the spherical aberration.

Further, it is preferable in the present invention that the step to calculate the distance from the surface of the optical disc that is loaded in the optical disc apparatus to the information recording laser, includes: a step to irradiate the optical disc with a light beam; a step to move an objective lens which focuses the light beam on the information recording layer of the optical disc in a direction along which the objective lens comes closer to or goes away from the optical disc; a step to obtain time for the objective lens to move from the surface to the information recording layer by a prescribed signal which is obtained by processing signal which is output from a photo detecting portion that receives the light beam reflected by the optical disc while the objective lens is moving; and a step to calculate the distance from the surface of the optical disc which is loaded in the apparatus to the information recording layer, from the obtained time and speed to move the objective lens in the spherical aberration correction method which is structured as above described. By this arrangement, it becomes possible for a part of flow for the present invention to make the same flow as a method to discriminate kind of the optical disc, and it becomes possible to obtain condition to correct the spherical aberration with high speed.

As above described, in accordance with the present invention, a spherical aberration correcting method which performs the correction of the spherical aberration in consideration of the variation in production of the optical disc in addition to the variation in production of the optical disc apparatus, and an optical disc apparatus to which such spherical aberration correcting method is applied, can be provided. As a result, in accordance with the present invention, it becomes possible to improve quality of reproducing and recording of information for an optical disc.

BRIEF DESCRIPTION OF THE DRAWINGS

Fig. 1 is a block diagram to show structure of an optical disc apparatus according to the present embodiment;

Fig. 2 is a schematic diagram to show an optical system of an optical pickup which is included in the optical disc apparatus according to the present embodiment;

Fig. 3 is a schematic plan view to show structure of a collimator lens moving mechanism which is included in the optical disc apparatus according to the present embodiment;

Fig. 4 is an explanatory diagram to explain structure of a photo receiving area which is formed in a photo detector that is included in the optical disc apparatus according to the present embodiment;

Fig. 5 is a flowchart to show a flow deciding a setting condition of a spherical aberration correcting mechanism which is included in the optical disc apparatus according to the present embodiment;

Fig. 6 is a diagram to explain relation between focus positions of an objective lens and peaks of a pull-in signal; and

Fig. 7 is a diagram to explain relation between the focus positions of the objective lens and S-curves of a focus error signal.

BETAILED DESCRIPTION OF THE PREFERRED EMBODIMENTS

Hereinafter, explanation about embodiment of an optical disc apparatus and a spherical aberration correcting method in accordance with the present invention will be given with reference to drawings.

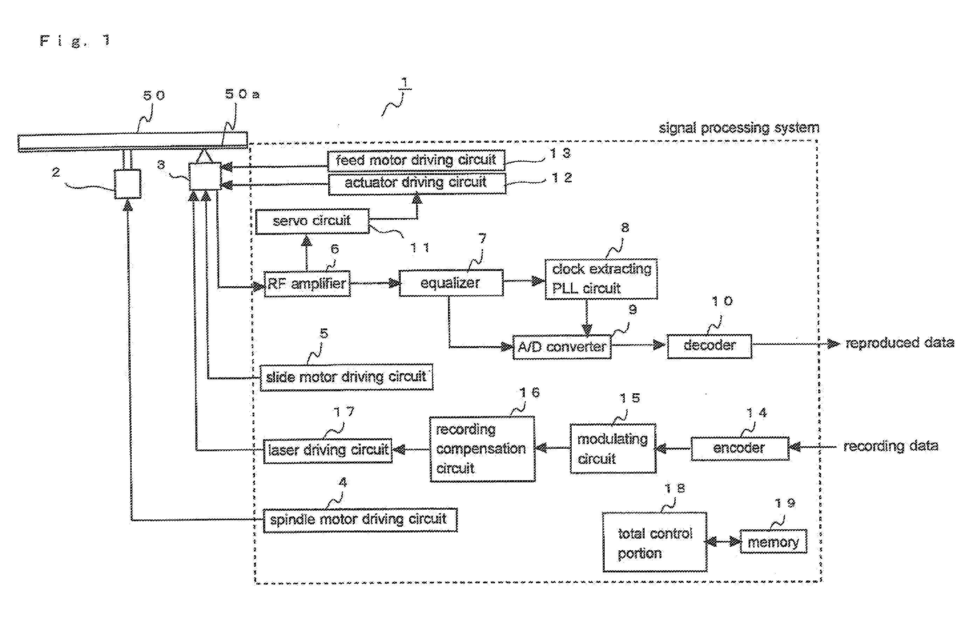

First, structure of an optical disc apparatus according to the present embodiment is explained. Fig. 1 is a block diagram to show structure of the optical disc apparatus according to the present embodiment. It should be noted that the optical disc apparatus 1 according to the present embodiment is made capable of performing reproducing and recording of information for a BD, a DVD, and a CD.

A spindle motor 2 is coupled with a turntable (not shown) to make the turntable rotatable. The turntable holds an optical disc 50 in detachable manner. As a result, the optical disc 50 which is held on the turntable can be rotated by rotating the spindle motor 2.

An optical pickup 3 is a device to make reading out of information which is recorded on the optical disc 50 or writing of information on the optical disc 50 possible by irradiating light beam that is emitted from a light source onto the optical disc 50. The optical pickup 3 is formed such that the optical pickup 3 slides along two guide rails (not shown) which extend in a radial direction (horizontal direction of Fig. 1) of the optical disc 50 by a driving mechanism that is not shown. By this arrangement, the optical pickup 3 can move along the radial direction of the optical disc 50 and can access appropriately to arbitrary address of the optical disc 50.

It should be noted that the driving mechanism to drive the optical pickup 3 is provided with, for example, a slide motor, a pinion which is rotated by the slide motor, and a rack which is engaged with the pinion to move the optical pickup 3 using relation between the rack and the pinion.

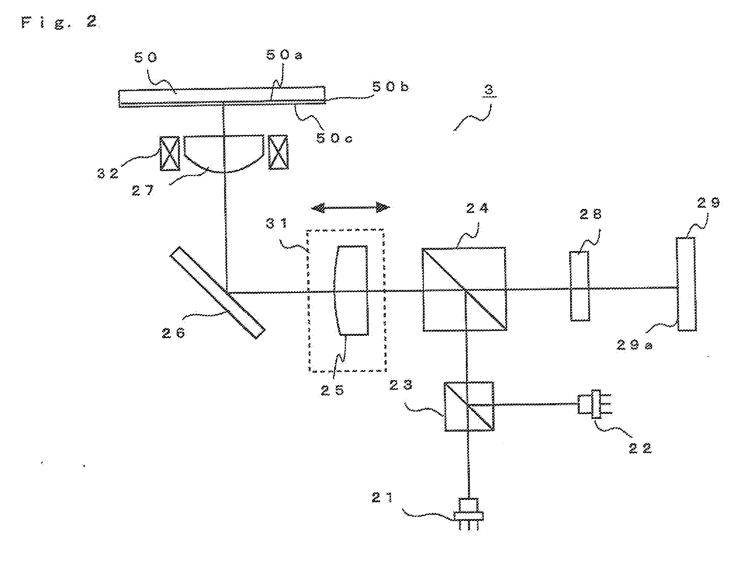

Fig. 2 is a schematic diagram to show structure of an optical system of the optical pickup 3 which is included in the optical disc apparatus 1 according to the present embodiment. As shown in Fig. 2, the optical pickup 3 is provided with a laser diode for the BD 21, a laser diode for the DVD/CD 22, a dichroic prism 23, a beam splitter 24, a collimator lens 25, an upstand mirror 26, an objective lens 27, a sensing lens 28, and a photo detector 29.

The laser diode for the BD 21 is used in case where information which is recorded on the BD is read out, or in case where information is written on the BD by the optical pickup 3. The laser diode for the BD 21 is structured such that it emits the laser beam having wavelength of 405 nm in the present embodiment.

The laser diode for the DVD/CD 22 is used in case where information which is recorded on the DVD or the CD is read out, or in case where information is written on the DVD or the CD by the optical pickup 3. The laser diode for the DVD/CD 22 is structured such that it can emit the laser beam having wavelength of 650 nm (for the DVD) or the laser beam having wavelength of 780 nm (for the CD) by switching in the present embodiment. Such structure can be realized by a laser diode so called hybrid type or a laser diode of monolithic type.

The dichroic prism 23 is structured such that it passes the laser beam which is emitted from the laser diode for the BD 21 and it reflects the laser beam which is emitted from the laser diode for the DVD/CD 22. An optical axis of the laser beam which is emitted from the laser diode for the BD 21 and an optical axis of the laser beam which is emitted from the laser diode for the DVD/CD 22 are made substantially the same by passing the dichroic prism 23.

The beam splitter 24 reflects the laser beam from the dichroic prism 23 to guide it to the optical disc 50 side. Further the beam splitter 24 passes the laser beam which is reflected by the optical disc 50 and comes to the beam splitter 24 to guide it to the photo detector 29 side.

The collimator lens 25 has a function to convert diverging ray which is input into parallel ray. In the present embodiment, the collimator lens 25 is made movable along an optical axis direction (direction shown by an arrow in Fig. 2) by a collimator lens moving mechanism 31. Because the collimator lens 25 is movable as mentioned above, position of the collimator lens 25 is shifted to change degree of convergence or divergence of The laser beam that is input to the objective lens 27, and spherical aberration which is generated in the optical pickup 3 is consequently corrected. That is, the collimator lens 25 and the collimator lens moving mechanism 31 function as a spherical aberration correcting mechanism.

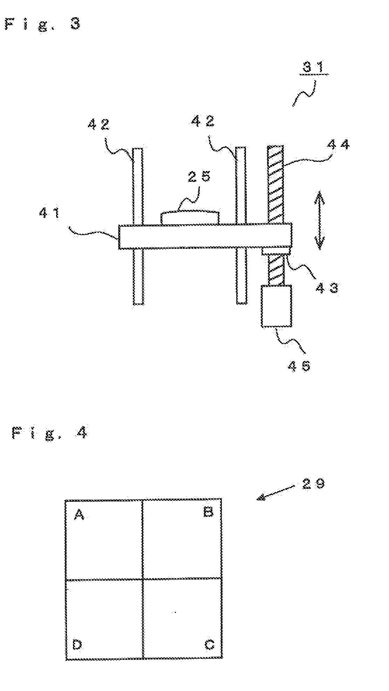

Fig. 3 is a schematic plan view to show structure of the collimator lens moving mechanism 31 which is included in the optical disc apparatus I according to the present embodiment. As shown in Fig. 3, the collimator lens moving mechanism 31 is provided with a collimator lens holding portion 41, two guide bars 42, a heading nut 43, a leading screw 44, and a feed motor 45.

The collimator lens holding portion 41 holds the collimator lens 25. The two guide bars 42 are stationary disposed in parallel with the optical axis direction (direction shown by an arrow in Fig. 3) to guide movement of the collimator lens holding portion 41. The leading nut 43 is attached to the collimator lens holding portion 41. The leading screw 44 is formed to engage with the leading nut 43, and attached to an output shaft of the feed motor 45. It should be noted that the feed motor 45 is a stepping motor in the present embodiment.

When the feed motor 45 is rotated, the leading screw 44 is also rotated, and the collimator lens holding portion 41 is moved with movement of the leading nut 43 which is engaged with the leading screw 44. As a result, the collimator lens holding portion 41 can be moved along the optical axis direction by controlling the rotation of the feed motor 45, then, it becomes possible to dispose the collimator lens 25 in a desired position.

Now return to Fig. 2, the upstand mirror 26 reflects the laser beam which is passed through the collimator lens 25, and makes a traveling direction of the laser beam vertical to the information recording layer 50a of the optical disc 50.

The objective lens 27 focuses the laser beam which is sent from the upstand mirror 26, on the information recording layer 50a of the optical disc 50. The objective lens 27 is mounted on an objective lens actuator 32. The objective lens actuator 32 has a lens holder (not shown) which holds the objective lens 27, and makes the lens holder move in a focus direction and a tracking direction using an electromagnetic action. By this arrangement, it becomes possible to perform a focus control which controls the objective lens 27 such that the focus position of the objective lens 27 is always matched on the information recording layer 50a, and to perform a tracking control which controls the objective lens 27 such that a light spot focused with the objective lens 27 follows on a track of the optical disc 50.

It should be noted that the focus direction is a direction along which the objective lens 27 comes closer to or goes away from the optical disc 50, and it is parallel to the optical axis. The tracking direction is a direction which is parallel to a radial direction of the optical disc 50, and it is a vertical direction to surface of paper in Fig. 2. Further, structure of the objective lens actuator 32 is similar to structure that is well known, therefore, detailed explanation for it is omitted.

The sensing lens 28 gives astigmatism to the laser beam which is reflected by the information recording layer 50a of the optical disc, and passes the objective lens 27, the upstand mirror 26. the collimator lens 25, and the beam splitter 24 in this order.

The photo detector 29 receives the laser beam which is sent from the sensing lens 28, and converts light into electric signal (photoelectric conversion). In a photo receiving surface 29a of the photo detector 29 according to the present embodiment, a photo receiving area which is divided into four areas of A, B, C, and D, are formed as shown in Fig. 4. The signal which is output from the photo detector 29 are processed as bellow described to generate a reproduced RF signal, a pull-in signal, the focus error signal, the tracking error signal, and the like. Fig. 4 is an explanatory diagram to explain structure of the photo receiving area which is formed in the photo detector 29 that is included in the optical disc apparatus 1 according to the present embodiment.

Now return to Fig. 1, a spindle motor driving circuit 4 performs control of rotation of the spindle motor 2. A slide motor driving circuit 5 controls driving of a slide motor which is included in a driving mechanism to make the optical pickup 3 move in the radial direction.

An RF amplifier 6 is supplied with the electric signal from the photo detector 29 in the optical pickup 3 to perform generating of the reproduced RF signal, the focus error signal (FE signal, the bracking error signal (TE signal), the pull-in signal, and the like. The reproduced RF signal which is generated is supplied to an equalizer 7 that will be described later. The FE signal and the TE signal are supplied to a servo circuit 11 that will be described later. Further, the FE signal and the pull-in signal are supplied to a total control portion 18 that will be described later.

It should be noted that the term "pull~in signal" is used as a name to mean a signal which shows signal intensity in response to amount of reflected light that is reflected by the optical disc 50, and a signal which is summed up of signals that are output from the four divided areas of A to D of the photo detector 29 (See, Fig. 4).

An equalizer 7 performs equalizing adjustment (wave equalizing process) for the reproduced RF signal which is supplied from the RF amplifier 6. Here, the equalizing adjustment is a process to cut off a component which has higher frequency than a prescribed value from the reproduced RF signal and to boost the reproduced RF signal. A clock extracting PLL circuit 8 is a synchronizing signal generating circuit which has a circuit structure that is called a Phase Locked Loop (PLL). An A/D converter 9 performs A/D conversion for the equalizing-adjusted reproduced RF signal while synchronizing a timing of clock of the clock extracting PLL circuit 8.

A decoder 10 receives the signal on which the A/D conversion is performed, and performs data demodulating process and error correction process to output reproduced data.

The servo circuit 11 performs generation of a focus driving signal and tracking driving signal and the like based on the FE signal and the TE signal. The focus driving signal and tracking driving signal which are generated are output to an actuator driving circuit 12.

The actuator driving circuit 12 receives from the servo circuit 11 the focus driving signal, the tracking driving signal, and the like to control driving of the objective lens actuator 32 on which the objective lens 27 is mounted, Further, in case where focus drawing by which focus position of the objective lens 27 is matched on the information recording layer 50a of the optical disc 50 is performed, where discrimination of kind of the optical disc 50 is performed, and the like, the actuator driving circuit 12 controls driving of the objective lens actuator 32 by a command from the total control portion 18.

A feed motor control circuit 13 controls driving of a feed motor 45 (See, Fig. 3) which forms the spherical aberration correcting mechanism. Setting of the spherical aberration correction is performed appropriately after kind of the optical disc 50 is discriminated, At this time, the feed motor control circuit 13 drives the feed motor 45 to move the collimator lens 25 in a most appropriate position, In the present embodiment, the most appropriate position of the collimator lens 25 is decided in consideration of the kind of the optical disc 50, and thickness of covering layer 50b of the optical disc 50 (See, Fig. 1). Detail of this point will be explained later.

An encoder 14 receives recording data which is recorded on the optical disc 50 from outside to perform adding of error correcting code (ECC). A modulating circuit 15 performs an encoding by a prescribed recording encoding method for the data to which the ECC is added. A recording compensation circuit 16 generates a pulse for recording (recording pulse) based on a prescribed write strategy when recording encoded signal which is encoded by the modulating circuit 15, is input. The term "write strategy" means a control rule for recording pulse.

A laser driving circuit 17 controls appropriately driving of the laser diode 21, 22 when reproducing, recording discriminating kind of the optical disc 50, deriding the setting condition for the correction of the spherical aberration, and the like are performed. When recording is performed, the laser driving circuit 17 performs recording in response to pulse waveform which is generated in the recording compensation circuit 16 through the above described steps by making the laser diode 21, 22 oscillate.

The total control portion 18 is provided with a microprocessor, and is connected to respective portions which compose the optical disc apparatus 1 with wire lines that are not shown to appropriately perform control processes in response to operations which are achieved by the respective portions, Further, in the optical disc apparatus 1 according to the present embodiment, the total control portion 18 functions as a means to decide the setting conditions for the spherical aberration correcting mechanism, too. About this point, explanation will be given later.

A memory (memory portion) 19 is provided in the total control portion 18. Various kinds of parameters and operating programs and the like which are required for the total control portion 18 to perform various kinds of processes, are stored in the memory 19.

Next, explanation will be given about the spherical aberration correcting method in the optical disc apparatus 1 according to the present embodiment. The correction of the spherical aberration is performed by the spherical aberration correcting mechanism which is provided with the collimator lens 25 and the collimator lens moving mechanism 31 as above described. In the optical disc apparatus 1, when kind of the optical disc 50 which is loaded in the optical disc apparatus 1, is discriminated, the setting condition of the spherical aberration correcting mechanism is decided based on the result of discrimination. Then, the spherical aberration correcting mechanism is driven to resize the decided setting condition, and the correction of the spherical aberration which is generated when information recorded on the optical disc 50 is reproduced, or information is recorded on the optical disc 50, is performed.

It should be noted that, because any of the method to discriminate kind of the optical disc 50 may be utilized among the well known various methods, delated explanation on it is omitted here.

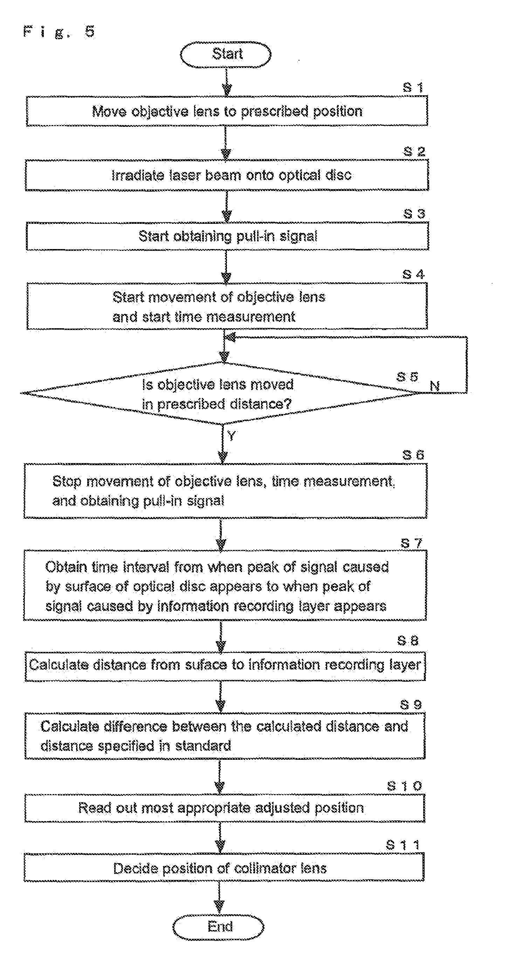

Fig. 5 is a flowchart to show a flow deciding the setting condition of the spherical aberration correcting mechanism which is included in the optical disc apparatus 1 according to the present embodiment. Hereinafter, detail of the method to decide the setting condition of the spherical aberration correcting mechanism will be explained with reference to Fig. 5.

First, the total control portion 18 outputs a command to the actuator driving circuit 12 to move the objective lens 27 to a prescribed position (step S1), In the present embodiment, the prescribed position is decided was a position where the focus position of the objective lens 27 becomes enough before surface 50c (See, Fig. 2) of the optical disc 50 in a direction in which the objective lens goes away from the optical disc 50 (in Fig. 2, position under the optical disc 50). Then, if the objective lens 27 is moved to the prescribed position, the total control portion 18 outputs a command to the laser driving circuit 17 to irradiate the laser beam onto the optical disc 50 (step S2).

The laser beam which is irradiated here, is emitted from the laser diode for the BD 21 or the laser diode for the DVD/CD 22 that are the light sources of the optical disc apparatus 1. In this step, laser beam having any, wavelength may be used as far as a peak of the pull-in signal which will be explained below can be obtained. However, if any peak of desired signal cannot be obtained when laser beam having any wavelength is emitted, wavelength of the laser beam is appropriately changed in order that peak of the desired signal can be detected. Further, in case where kind of the optical disc 50 which is loaded in the optical disc apparatus 1 is discriminated already at the time point in this step S2 (there may be a case where kind of the optical disc 50 is not discriminated), it is preferable that the laser beam having the wavelength which is used for the kind of optical disc 50, is selected.

When irradiating of the laser beam onto the optical disc 50 is begun, the total control portion 18 starts to obtain the pull-in signal from the RF amplifier 6 (step S3). Then, by output of a command from the total control portion 18 to the actuator driving circuit 12, the objective lens 27 starts to move in the direction along which the objective lens 27 comes closer to the optical disc 50. At the same time when the movement is started, the total control portion 18 starts measurement of time by a timer (not shown) (step S4). The movement of the objective lens 27 is continued till it is moved in a prescribed distance while it is confirmed whether the objective lens 27 is moved up to the prescribed distance (step S5).

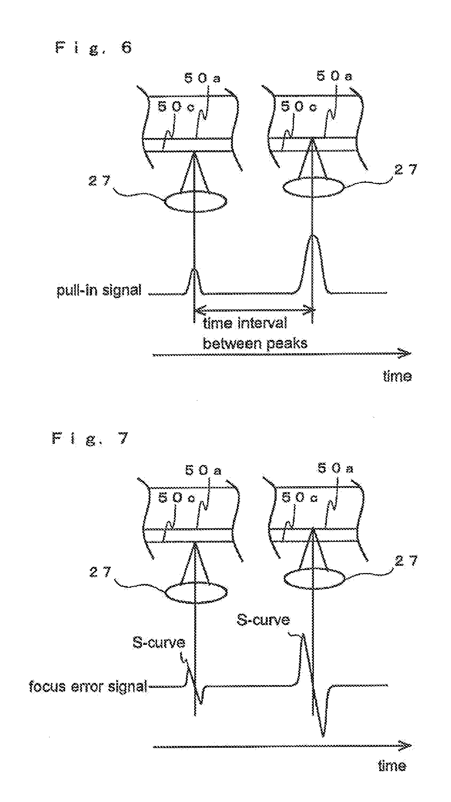

When the objective lens 27 is moved in the prescribed distance, the movement of the objective lens 27 by the objective lens actuator 32, time measurement by the timer, and obtaining of the pull-in signal are stepped by a command from the total control portion 18 (step S6). By the processes till step S6, the total control portion 18 detects peak of the pull-in signal which is caused by the surface 50c of the optical disc 50, and peak of the pull-in signal which is caused by the information recording layer 50a for the optical disc 50 which is loaded in the optical disc apparatus 1 (See, Fig. 6).

Fig. 6 is a diagram to explain relation between the focus positions of the objective lens 27 and the peaks of the pull-in signals. As shown in Fig. 6, peaks of the pull-in signal are obtained in case where the focus position of the objective lens 27 is matched on the surface 50c of the optical disc 50, and where the focus position of the objective lens 50 is matched on the information recording layer 50a.

The total control portion 18 obtains a time interval from when the peak caused by the surface 50c of the optical disc 50 appears to when the peak caused by the information recording layer 50a appears (this is shown as a time interval between the peaks in Fig. 6) based on detection result of the pull-in signal (step S7).

It should be noted that if the wavelength of the laser beam which is irradiated in step S2 is improper, as above describe, there is possibility that the peaks of the pull-in signal cannot be detected. In such a case, the wavelength of the laser beam which is irradiated in step S2 is changed and step S1 to step S7 are performed again.

In the optical disc apparatus which can perform reproducing or recording of the BD, the BVD, and the CD, there may be a case where kind of the optical disc 50 is discriminated based on distance difference from the surface of the optical disc 50 to the information recording layer (thickness of the cover layer 50b) among the respective optical discs 50. In such a case, similar operation as from step S1 to step S7 as described above is performed (kind of the optical disc 50 is discriminated based on time length that is obtained in step S7). That is, there may be a case where result of operation from step S1 to step S7 can he obtained when kind of the optical disc 50 is discriminated. In such a case, operation from step S1 to step S7 is not necessary to perform after kind of the optical disc 50 is discriminated and it is preferable that result which is obtained by discrimination of kind of the optical disc 50 is utilized.

Next, the total control portion 18 multiplies the time interval which is obtained in step S7 by a moving speed of the objective lens 27 that is moved by the objective lens actuator 32. By this calculation, distance from the surface 50c of the optical disc 50 to the information recording layer 50a (thickness of the cover layer 50b) is calculated (step S8). By these steps, correct thickness of the cover layer 50b of the optical disc 50 which is loaded in the optical disc apparatus 1 can be obtained.

It is ordinary that sensitivity when the objective lens 27 is moved by the objective lens actuator 32 is different for every optical pickup 3 (for example, even though the same voltage is applied to the optical pickup, moving speed of the objective lens 27 is different for every optical pickup 3 and the same speed cannot be obtained). By this reason, moving speed of the objective lens 27 is obtained individually when the optical pickup 3 is manufactured and it is stored in the memory 19 (See, Fig. 1).

After the thickness of the cover layer 50b of the optical disc 50 which is loaded in the optical disc apparatus 1 is calculated, the total control portion 18 subtracts the calculated thickness of the cover layer 50b from thickness of the cover layer that is defined in standard of the optical disc 50 (for example, 0.1 mm for the BD, 0.6 mm for the DVD, and 1.1 mm for the CD) which is loaded in the optical disc apparatus 1 (step S9). It should be noted that it is necessary that kind of the optical disc 50 which is loaded in the optical disc apparatus 1 is discriminated already at the time point.

Next, the total control portion 18 reads out the most appropriate adjusted position of the collimator lens 25 for every kind of the optical disc 50 which is stored in the memory 19 (step S10). Here, explanation will be given about the most appropriate adjusted position. An optical system of the optical pickup 3 generally has variation in production. And when position of the collimator lens 25 is decided uniformly according to kind of the optical disc 50, there consequently may be a ease where the correction of the spherical aberration cannot be performed completely. By this reason, in the present embodiment, when the optical disc apparatus 1 is manufactured, optical discs for condition setting which are formed such that each of them has thickness which is defined in the standard of the cover layer 50b for every kind of the optical disc 50, are prepared (it can be realized by forming the cover layer 50b, for example, using glass). Then, utilizing these, the position of the collimator lens 50 where the spherical aberration can be properly corrected for the respective optical pickups 3, is decided respectively. The adjusted position of the collimator lens 25 which is decided as above described, is called as the most appropriate adjusted position.

When the total control portion 18 reads out the most appropriate adjusted position of the collimator lens 25, the total control portion 18 shifts the position of the collimator lens 25 a substantially same distance as the difference of distance calculated in step S9 from the most appropriate adjusted position to decide the setting condition of the spherical aberration correcting mechanism (step S11). It should he noted that there are cases where the distance which is calculated in step S9 are plus or minus, In these two cases of plus or minus, directions along which the collimator lens 25 is moved are reverse.

Further, in the present embodiment, the feed motor 45 (See, Fig. 3) which is included in the collimator lens moving mechanism 31 that performs driving of the collimator lens 25, is a stepping motor. By this arrangement, it is not always easy to adjust the position of the collimator lens 25 such that the position of the collimator lens 25 is shifted in the distance as quite the same as distance which is calculated in step S9. As a result, structure is employed in which distance that is approximately the same as the distance that is calculated in step S9 is shifted from the most appropriate adjusted position in consideration of adjusting accuracy for the stepping motor.

As above described, there are many cases where the cover layer 50b of the optical disc 50 is made of transparent resin such as polycarbonate or the like. In such cases, it tends to generate variation in thickness of the cover layer. By this reason, there may be a case where correction of the spherical aberration cannot be performed completely even when the collimator lens 25 is disposed at the most appropriate adjusted position that is stored in the memory 19. As a result, structure is employed in which actual thickness of the cover layer 50b of the optical disc 50 that is loaded in the optical disc apparatus 1 is measured, and the spherical aberration which is caused by the variation in production of the optical disc is constrained utilizing that result.

As above described, when the setting condition for the spherical aberration correcting mechanism is decided, the total control portion 18 outputs a command to the feed motor control circuit 13 to move the position of the collimator lens 25 to the calculated position. Further, as above described, the total control portion 18 functions as a distance obtaining portion which obtains distance from the surface 50c of the optical disc 50 to the information recording layer 50a. In addition, the total control portion 18 functions as a difference of distance calculating portion which calculates difference between the distance that the optical disc 50 which is loaded in the optical disc apparatus 1 should have as the standard and the distance that is calculated actually, with respect to the distance from the surface 50c to the information recording layer 50a .

By the optical disc apparatus 1 according to the present embodiment, it is possible to constrain the spherical aberration which is caused by the variation in production of the optical disc 50 in addition to the spherical aberration which is caused by the variation in production of the optical pickup 3. As a result, by the optical disc apparatus 1 according to the present embodiment, improvement in equality to reproduce and to record information can be realized. Further, in the optical disc apparatus 1 according to the present embodiment, the structure by which the setting condition for spherical aberration correcting mechanism is decided utilizing the result that is obtained when kind of the optical disc 50 is discriminated (which is not the result of discrimination of kind of the optical disc) can be realized. In such a case, time interval can be reduced from when power of the optical disc apparatus 1 is turned on to when reproducing or recording is started because time interval which is required to decide the setting condition for the spherical aberration correcting mechanism, can be reduced.

The embodiment shown above is mere one example, and the present invention is net limited to the above described embedment. It is possible to introduce various modifications within a range which is not apart from the object of the present invention.

In the embodiment shown above, structure is employed in which the objective lens 27 is moved in a direction that the objective lens 27 comes closer to the optical disc 50 when the distance from the surface 50c of the optical disc 50 which is loaded in the optical disc apparatus 1 to the information recording layer 50a, is measured. However, the present invention is not limited to the structure and it is no problem that structure is employed in which the objective lens 27 is moved in a direction that the objective lens 27 goes away from the optical disc 50 when the distance from the surface 50c of the optical disc 50 which is loaded in the optical disc apparatus 1 to the information recording layer 50a, is measured.

Further, in the embodiment shown above, structure is employed in which the pull-in signal is used when the distance from the surface 50c of the optical disc 50 which is loaded in the optical disc apparatus 1 to the information recording layer 50a, is measured, However, the present invention is not intended to be limited to the structure. In case where the objective lens 27 is moved in the direction that the objective lens 27 comes closer to or goes away from the optical disc 50, for example,1 the S-curve of the focus error signal (See, Fig. 7) is obtained when the focus position of the objective lens 27 passes the surface 50c and the information recording layer 50a of the optical disc 50. As a result, it is no problem that structure or the like is employed in which the focus error signal is used instead of the pull-in signal. The focus error (FE) signal can be obtained utilizing the photo detector 29 which has four divided photo receiving areas and below arithmetic expression.

$$FE\ signal = (SA+SC) - (SB+SD)$$

where SA, SB, SC and SD are signal which are output from the respective areas.

Further, in the embodiment shown above, structure is employed in which the collimator lens 25 is made movable along the optical axis direction in the spherical aberration correcting mechanism, and the correction of the spherical aberration is performed by adjusting the position of the collimator lens 25. However, the present invention is not intended to be limited to the structure. That is, it is no problem that structure is employed in which the spherical aberration correcting mechanism is provided with an expander lens that has a plurality of lenses, at least one of the plurality of lenses is made movable along the optical axis direction, and the correction of the spherical aberration is performed by adjusting position of the movable lens. To such structure, the present invention can be applied.

Further in the embodiment shown above, the optical disc apparatus that can be applied to three kinds of the optical discs such as the BD, the DVD, and the CD, is explained. However, the present invention is not intended to be limited to the optical disc apparatus that is applied to these optical discs, of course.

Further, in the present embodiment, explanation was given for the case that the information recording layer of the optical disc is single layer. However, the present invention can be applied to an optical disc that has a plurality of information recording layers, of course. In case of the multilayer optical disc that has a plurality of information recording layers, structure is employed in which respective distances from surface to the information recording layers of the optical disc are measured for every information recording layer, and the respective setting conditions for the spherical aberration correcting mechanism are decided for every case of the information recording layer. Even in this case, the optical discs for condition setting which has a plurality of information recording layers are prepared. If an optical disc apparatus is applied to only one kind of optical disc (for example, BD), one kind of optical disc for condition setting is prepared. And if an optical disc apparatus can be applied to a plurality kinds of optical discs, various kinds of optical discs for condition setting are prepared.

By the optical disc apparatus in accordance with the present invention, it becomes possible to perform the correction of the spherical aberration correctly, and to improve quality of reproducing and recording of information for the optical disc. As a result, the present invention is an invention which is useful in technical field of the optical disc apparatus.

Features, components and specific details of the structures of the above-described embodiments may be exchanged or combined to form further embodiments optimized for the respective application. As far as those modifications are readily apparent for an expert skilled in the art they shall be disclosed implicity by the above description without specifying explicitly every possible combination, for the sake of conciseness of the present description.

**Claims**

1. An optical disc apparatus (1) comprising:

   a light source;
   an objective lens (27) which focuses light beam which is emitted from the light source on an information recording layer of an optical disc;
   a spherical aberration correcting mechanism which has a movable lens disposed between the light source and the objective lens (27), the lens being able to move along an optical axis direction, and a lens moving mechanism for moving the movable lens, and the mechanism performing correction of the spherical aberration by adjusting position of the movable lens;
   a photo detecting portion (29) which receives the light beam that is reflected by the optical disc (50) to perform photoelectric conversion;
   a memory portion which stores data that relates to a most appropriate adjusted position of the movable lens in the optical disc apparatus, the data being obtained in advance utilizing at least one kind of optical discs (50) for condition setting that is formed such that distance from a surface of the optical disc to the information recording layer (50 a) meets a standard;
   a distance obtaining portion which obtains the distance from the surface of the optical disc that is loaded in the optical disc apparatus to the information recording layer; and
   a difference of distance calculating portion which calculates difference of distance between the distance that is obtained by the distance obtaining portion and distance that the optical disc should have as specified in standard, with respect to the distance from the surface of the optical disc that is loaded in the optical disc apparatus (1) to the information recording layer (50 a), wherein
   the correction of the spherical aberration by the spherical aberration correcting mechanism is performed such that the position of the movable lens is shifted a substantially same distance as the difference of distance that is obtained by file difference of distance calculating portion from the most appropriate adjusted position.

2. The optical disc apparatus (1) according to Claim 1, wherein the movable lens is a collimator lens (25), or at least one lens of an expander lens which has a plurality of lenses.

3. The optical disc apparatus (1) according to Claim 1 or Claim 2, further comprising:

   an objective lens actuator which makes the objective lens move along a direction that the objective lens comes closer to or goes away from the optical disc, wherein
   the distance obtaining portion detects the surface of the optical disc and the information recording layer, by using a prescribed signal that is obtained by processing a signal which is output from the photo detecting portion when the objective lens is moved by the objective lens actuator, to obtain the distance from the surface of the optical disc (50) to the information recording layer (50 a).

4. The optical disc apparatus (1) according to Claim 3, wherein the prescribed signal is a focus error signal or a summed signal which is obtained by adding signals that are output from a plurality of divided of the photo detecting portion.

5. A spherical aberration correcting method in an optical disc apparatus comprising a spherical aberration correcting mechanism which corrects a spherical aberration by moving a movable lens along an optical axis direction, the method comprising:

a step to obtain data which relates to a most appropriate adjusted position of the movable lens in the optical disc apparatus (1) utilizing at least one kind of optical discs (50) for condition setting that is formed such that distance from a surface of the optical disc to (50) an information recording layer (50 a) thereof meets a standard, and to store the data in a memory portion in advance;

a step to calculate the distance from the surface of the optical disc (50) that is loaded in the optical disc apparatus (1) to the information recording layer (50 a);

a step to obtain deference of the distance between the calculated distance and distance that the optical disc should have as specified in standard, with respect to the distance from the surface of the optical disc that is loaded in the optical disc apparatus (1) to the information recording layer (50 a); and

a step to perform correction of the spherical aberration such that the most appropriate adjusted position which corresponds to the optical disc that is loaded in the optical disc apparatus is shifted a substantially same distance as the difference of distances that is obtained.

6. The spherical aberration correcting method according to Claim 5, wherein the step to calculate the distance from the surface of the optical disc that is loaded in the optical disc apparatus to the information recording layer, includes:

a step to irradiate the optical disc with a light beam;

a step to move an objective lens which focuses the light beam on the information recording layer of the optical disc in a direction along which the objective lens comes closer to or goes away from the optical disc;

a step to obtain time for the objective lens to move from the surface to the information recording layer by a prescribed signal which is obtained by professing signal which is output from a photo detecting portion that receives the light beam reflected by the optical disc while the objective lens is moving; and

a step to calculate the distance from the surface of the optical disc (50) which is loaded in the apparatus (1) to the information recording layer (50 a), from the obtained time and speed to move the objective lens.

Fig. 1

signal processing system

50  50a  1

2  3

| feed motor driving circuit | 13 |
| actuator driving circuit | 12 |

servo circuit  11

6  7  8

RF amplifier → equalizer → clock extracting PLL circuit

9  10

A/D converter → decoder → reproduced data

5

slide motor driving circuit

17  16  15  14

laser driving circuit ← recording compensation circuit ← modulating circuit ← encoder ← recording data

4

spindle motor driving circuit

18  19

total control portion ↔ memory

Fig. 2

Fig. 3

31

42

42

25

44

41

43

45

Fig. 4

29

| A | B |
|---|---|
| D | C |

F i g. 5

```
                    ( Start )
                        │
                        ▼                          S 1
        ┌─────────────────────────────────────┐
        │  Move objective lens to prescribed position │
        └─────────────────────────────────────┘
                        │
                        ▼                          S 2
        ┌─────────────────────────────────────┐
        │    Irradiate laser beam onto optical disc  │
        └─────────────────────────────────────┘
                        │
                        ▼                          S 3
        ┌─────────────────────────────────────┐
        │      Start obtaining pull-in signal        │
        └─────────────────────────────────────┘
                        │
                        ▼                          S 4
        ┌─────────────────────────────────────┐
        │       Start movement of objective lens     │
        │        and start time measurement          │
        └─────────────────────────────────────┘
                        │◄──────────────────────────┐
                        ▼                          S 5  │
                   ╱──────────────╲                  N │
                  ╱ Is objective lens moved ╲──────────┘
                  ╲ in prescribed distance? ╱
                   ╲──────────────╱
                        │ Y
                        ▼                          S 6
        ┌─────────────────────────────────────┐
        │  Stop movement of objective lens, time measurement, │
        │        and obtaining pull-in signal        │
        └─────────────────────────────────────┘
                        │
                        ▼                          S 7
        ┌─────────────────────────────────────┐
        │ Obtain time interval from when peak of signal caused │
        │  by surface of optical disc appears to when peak of │
        │ signal caused by information recording layer appears │
        └─────────────────────────────────────┘
                        │
                        ▼                          S 8
        ┌─────────────────────────────────────┐
        │ Calculate distance from suface to information recording layer │
        └─────────────────────────────────────┘
                        │
                        ▼                          S 9
        ┌─────────────────────────────────────┐
        │ Calculate difference between the calculated distance and │
        │        distance specified in standard      │
        └─────────────────────────────────────┘
                        │
                        ▼                          S 10
        ┌─────────────────────────────────────┐
        │   Read out most appropriate adjusted position │
        └─────────────────────────────────────┘
                        │
                        ▼                          S 11
        ┌─────────────────────────────────────┐
        │      Decide position of collimator lens    │
        └─────────────────────────────────────┘
                        │
                        ▼
                     ( End )
```

Fig. 6

Fig. 7

**EUROPEAN SEARCH REPORT**

Application Number

EP 08 16 8448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | JP 2007 164927 A (PULSTEC IND CO LTD) 28 June 2007 (2007-06-28) * abstract; figure 4 * ----- | 1-6 | INV. G11B7/085 G11B7/09 |
| A | WO 2007/000728 A (KONINKL PHILIPS ELECTRONICS NV [NL]; PHILIPS CORP [US]; JANSSEN EDWIN) 4 January 2007 (2007-01-04) * the whole document * ----- | 1-6 | ADD. G11B7/00 G11B7/125 G11B7/135 G11B19/12 |
| A | US 2004/207944 A1 (ICHIMURA ISAO [JP]) 21 October 2004 (2004-10-21) * paragraphs [0256] - [0270]; figure 1 * ----- | 1-6 | |

TECHNICAL FIELDS SEARCHED (IPC)

G11B

The present search report has been drawn up for all claims

| Place of search | Date of completion of the search | Examiner |
|---|---|---|
| The Hague | 13 February 2009 | Tanguy Michotte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 16 8448

13-02-2009

| Patent document cited in search report | Publication date | Patent family member(s) | Publication date |
|---|---|---|---|
| JP 2007164927 A | 28-06-2007 | NONE | |
| WO 2007000728 A | 04-01-2007 | CN 101213602 A | 02-07-2008 |
| | | EP 1905027 A1 | 02-04-2008 |
| | | JP 2008545216 T | 11-12-2008 |
| | | KR 20080021153 A | 06-03-2008 |
| | | US 2008205248 A1 | 28-08-2008 |
| US 2004207944 A1 | 21-10-2004 | CN 1552065 A | 01-12-2004 |
| | | EP 1521246 A1 | 06-04-2005 |
| | | WO 2004006232 A1 | 15-01-2004 |
| | | JP 2004039125 A | 05-02-2004 |

EPO FORM P0459

For more details about this annex : see Official Journal of the European Patent Office, No. 12/82

**EP 2 058 806 A1**

**Patent documents cited in the description**

- JP 2006252615 A

- JP 2007164927 A